# EUROPÄISCHE PATENTSCHRIFT

(11) **EP 1 194 327 B1**
(45) Veröffentlichungstag und Bekanntmachung des Hinweises auf die Patenterteilung: **05.11.2003**
(21) Anmeldenummer: 00938777.0
(22) Anmeldetag: 08.06.2000
(51) Int. Cl.: B62D 29/00, B62D 25/08

(54) **FRONTENDMODUL FÜR EIN KRAFTFAHRZEUG**
FRONT-END MODULE FOR A MOTOR VEHICLE
MODULE D'EXTREMITE AVANT POUR VEHICULE AUTOMOBILE

(30) Priorität: 23.06.1999 DE 19928447; 07.09.1999 DE 19942602; 21.01.2000 DE 10002499
(43) Veröffentlichungstag der Anmeldung: 10.04.2002
(73) Patentinhaber: Dynamit Nobel Kunststoff GmbH, 91781 Weissenburg (DE); Pleschke, Thomas, 91781 Weissenburg (DE); Wolf, Hans-Jürgen, 57439 Attendorn (DE)
(72) Erfinder: PLESCHKE, Thomas, D-91781 Weissenburg (DE); WOLF, Hans-Jürgen, D-57439 Attendorn (DE)
(74) Vertreter: Scherzberg, Andreas, Dr.
(86) Internationale Anmeldenummer: EP0005292
(87) Internationale Veröffentlichungsnummer: WO01000478

(56) Entgegenhaltungen:
- EP-A- 0 658 470
- DE-U- 29 916 016
- FR-A- 2 783 794
- FR-A- 2 783 795
- FR-A- 2 783 796
- US-A- 5 290 079

## Beschreibung

Die Erfindung betrifft ein Frontendmodul für ein Kraftfahrzeug mit einem Front-end-Montageträger zwischen den Kotflügelbänken und mit einem die Längsträger des Kraftfahrzeugs verbindenden Stoßfängerquerträger, sowie ein Verfahren zur Herstellung dieses Frontendmoduls. Das Dokument EP 0 658 470 A zeigt ein gattungsgemäßes Frontendmodul.

Der Montageträger in Form des vorderen Abschlusses des Kraftfahrzeugrohbaus, umfaßt die Verbindung zwischen den Kotflügelbänken (= obere Längsträger) mit der Aufnahme des Haubenschlosses, in Längsachse des Fahrzeugs seitlich angeordnete Befestigungen für Scheinwerfer, sowie Anbindungen zu Kotflügeln und Längsträgern sowie die Kühleraufnahme.

Montageträger wurden in der Mehrzahl in der Vergangenheit aus Stahlblech, und in jüngerer Zeit aus Kunststoffen wie Polyamid 6, Polyamid 6.6, Polybutylenterephthalat, Polypropylen, Sheet Moulding Compound (SMC), glasmattenverstärkten Thermoplasten (GMT) oder langfaserverstärkten Thermoplasten (LFT) gefertigt. Im Fall der metallischen Lösungen stehen im wesentlichen strukturtragende Eigenschaften im Mittelpunkt. Bei Kunststofflösungen liegt das Hauptaugenmerk hauptsächlich auf einer möglichst einfachen und kostengünstigen Montage. Der Einsatz von Kunststofflösungen wurde ermöglicht durch die Entwicklung wesentlich steiferer Strukturträgersysteme, bestehend aus Längsträgern und Stoßfängerquerträgersystemen.

Der Montageträger (Schloßbrücke, Radiator Support Module) aus Kunststoff vereinfacht die Integration von Funktionsbaugruppen wie Kühler, Scheinwerfer, Haubenschlösser, Befestigungen, etc. durch die Möglichkeiten einfacher und kostengünstiger Formgebung gegenüber einer Stahllösung erheblich.

Montage- und Stoßfängerquerträger werden heute in der Regel als separate Teilmodule betrachtet und damit unabhängig voneinander entwickelt. Die Entwicklungsschwerpunkte Funktionsintegration auf der Seite des Montageträgers und Struktursteifigkeit sowie Energieaufnahme auf der Seite des Stoßfängerquerträger verhindern durch ihre getrennte Betrachtung eine ausreichende Integration von Bauteilen und Funktionen und damit einen effizienten und ökonomischen Leichtbau.

Montageträger und Stoßfängerquerträger sind jedoch eng benachbarte Baugruppen, die direkt oder über die Flanschplatten der Längsträger einerseits, und andererseits über die Befestigung der Stoßfängerhaut und des evtl. dahinter liegenden Schaumes miteinander verbunden sind. Die enge Nachbarschaft bedingt, daß das Montageträgersystem ebenso kollisionsbedingten Kräften ausgesetzt ist wie das Stoßfängerquerträgersystem. Zur Verstärkung von Kunststoffmontageträgern wird deshalb bereits heute optional eine metallische Verbindung horizontal zwischen den Kotflügelbänken eingebracht (oberer Querträger).

Diese Verbindung dient wesentlich der Stabilisierung des Vorderwagens für einen Aufprall, der dem Test mit einer weichen Barriere entspricht. Ebenfalls optional sind zusätzliche vertikale Blechverstärkungen des Kunststoffträgers zwischen dem oberen Querträger und den Längsträgern möglich.

Daneben ergibt sich für den Stoßfängerquerträger die Notwendigkeit zur Funktionsintegration, u.a. im Hinblick auf die Fixierung der Stoßfängerhaut, der Befestigung der Scheinwerfer und Nebelscheinwerfer, der Scheinwerferwaschdüsen, der Integration von Abstands- und Crashsensorik, des Homs, sowie der Befestigung von Elementen für den Fußgängerschutz wie Energieabsorptionsschäumen und Spoilerversteifungen.

Um beide Merkmale, nämlich Funktionsintegration des Kunststoffs und Steifigkeit der Metallstruktur miteinander zu kombinieren, verfolgt man in jüngerer Vergangenheit den Ansatz spritzgegossene oder gepreßte Kunststoffträger mit Verstärkungen aus Metall zu versehen. Diese Verstärkungen werden in der Regel aufgeklebt, aufgenietet oder aufgeschraubt. Eine moderne Möglichkeit zur Kombination beider Werkstoffmerkmale ist die direkte Herstellung durch Einformen eines metallischen Bleches bei der Kunststofformgebung.

Der Erfindung liegt die Aufgabe zugrunde, ein Frontendmodul nach dem Oberbegriff des Anspruchs 1 so zu verbessern, daß es wesentlich leichter und kostengünstiger herzustellen ist und aus weniger Einzelteilen besteht.

Erfindungsgemäß wird diese Aufgabe dadurch gelöst, daß der Stoßfängerquerträger und der Montageträger mit optionalen Verstärkungen einteilig im Kunststoff-Spritzgußverfahren als Kunststoff-Metall-Verbundbauteil mit in die Gußform eingelegten Blechteilen hergestellt sind.

In bevorzugter Ausführungsform sind für den Montageträger ein die Kotflügelbänke und für den Stoßfängerquerträger ein die Längsträger des Kraftfahrzeugs verbindendes Blechteil vorgesehen, wobei die Blechteile ein im Querschnitt U-förmiges Profil aufweisen und durch Einformung von Kreuz- oder ähnlichen Kunststoffrippen versteift sind.

Der Montageträger und der Stoßfängerquerträger sind dabei durch Verbindungswangen aus Kunststoff oder auch durch vertikale Kunststoff-Metall-Verbundprofile verbunden. Wesentlich hierbei ist jedoch, daß das Kunststoff-Metall-Verbundbauteil in einem Spritzvorgang mit den eingelegten Blechteilen hergestellt ist.

Für den Fall, daß die Verbindung durch den Stoßfängerquerträger zwischen den Längsträgern (im Bereich des ursprünglichen Querträgers) jedoch nicht in der Lage ist, das ursprüngliche Querträgersystem in vollem Umfang zu ersetzen, wird zur Verstärkung dieses Bereiches vorgeschlagen, ein offenes metallisches U-Profil oder eine Schließplatte auf das Kunststoff-Metall-Verbundprofil zu positionieren und anforderungsgerecht miteinander zu verbinden.

Erfindungsgemäß wird für den Stoßfängerquerträger zweckmäßigerweise auf die dem Rohbau zugewandte und in Fahrrichtung geöffnete Innenschale, die Bestandteil des Frontendmoduls ist, eine im Profil U-förmige Außenschale aus Blech aufgesetzt, so daß ein innerer Hohlraum entsteht. Dieser Hohlraum kann ganz oder teilweise mit Kunststoffrippen ausgefüllt sein.

Die Außenschale ist dabei mit der Innenschale vorzugsweise durch Schrauben, besonders mit Vorspannung, Nieten, Durchsetzfügen im Bereich der Flanken, Clinchen, Kleben, Schweißen oder formschlüssiges Fügen verbunden. Bevorzugt weisen die Außenschale und die Innenschale einen Formschluß in der Scherebene auf.

Dieses System läßt sich erfindungsgemäß in seiner Ausrichtung umkehren, wenn die ursprüngliche Außenschale aus Blech vor der Montage des Frontmoduls mit ihrer Öffnung in Fahrtrichtung an den Rohbau montiert wird. Dann kann das Kunststoff-Metall-Verbundbauteil, das die Gegenschale mit ihrer Öffnung entgegen der Fahrtrichtung durch Umspritzen aufnimmt, eventuell nach Vormontage mit Anbauteilen, in einem späteren Schritt durch Aufschieben auf die Blechschale an das Fahrzeug montiert werden. Die vor dem Lackierprozeß an das Fahrzeug montierte Außenschale kann in diesem Fall während der Schutzlackierung als Abstandshalter für die Längsträger dienen, um Verzug durch Wärmespannungen aus den Schweißprozessen zu veringern.

In besonders bevorzugter Ausgestaltung füllt das Profil der Kunststoffrippen den inneren Hohlraum des Stoßfängerquerträgers in Fahrzeuglängsrichtung teilweise oder vollständig aus, wobei sich die Kunststoffrippen in Fahrzeuglängsrichtung erstrecken.

Alternativ ist in besonderer Ausgestaltung vorteilhafterweise unterhalb des Stoßfängerquerträgers ein Fußgängerschutz angeordnet, der ebenfalls einteilig mit dem oberen Querträger und dem Stoßfängerquerträger im Kunststoff-Spritzgußverfahren als Hybridbauteil mit in die Gußform eingelegten Blechteilen hergestellt ist.

Der Fußgängerschutz besteht vorteilhafterweise aus einem sich quer zur Fahrzeuglängsrichtung erstreckenden Profil und aus Verbindungsstreben zum Stoßfängerquerträger.

Die Blechteile des Fußgängerschutzes weisen bevorzugt ein U-förmiges Profil auf und sind mit Kunststoffrippen ausgefüllt.

Der Fußgängerschutz dient als Abstützung für einen Spoiler, der in geringem Abstand vor dem Fußgängerschutz angeordnet ist.

Ein bevorzugtes Verfahren zur Herstellung eines Frontendmoduls zeichnet sich dadurch aus, daß Blechteile für den Montageträger und den Stoßfängerquerträger in eine Kunststoff-Spritzgußform eingelegt werden und diese Blechteile durch Einformen von Kunststoffrippen versteift und miteinander verbunden werden.

Soll ein Fußgängerschutz erforderlich sein, werden zusätzliche Blechteile in die Gußform eingelegt.

Zur Durchführung des Verfahrens wird ein die Längsträger des Kraftfahrzeugs verbindendes Blechteil als Innenschale in einer geringeren als der klassischen Wandstärke ausgeführt. Dieses Blech wird zusammen mit weiteren Blechen z.B. für den oberen Querträger, für den Fußgängerschutz oder für Diebstahlsicherheit in das Spritzgießwerkzeug eingelegt. Die Blechteile werden durch Einformung von Kreuzoder ähnlichen Rippen aus den oben genannten Kunststoffen im Spritzgußverfahren miteinander verbunden und versteift. Somit werden die Blechteile in einem Produktionsschritt in das Kunststoff-Metall-Verbundbauteil eingebracht. Es wird ein Kunststoff-Blech-Verbund hergestellt, der rohbauseitig mit den entsprechenden Befestigungspunkten ( = Längsträger, oberer Längsträger/Kotflügelbank) verschraubt oder verschweißt werden kann und in der Lage ist, den Vorderwagen während der gesamten Bauphase, insbesondere während der Schutzlackierung stabil zu halten. Alternativ kann das System komplett mit Frontscheinwerfern, Kühlsystem und anderen Komponenten vormontiert und bei dem Fahrzeughersteller nach der Schutzlackierung eingebaut werden.

Der Kunststoffanteil kann zudem eine Führungshilfe für das aufgesteckte U-Profil darstellen. Vorteilhaft ist es, wenn das Profil der Kunststoffrippen hierbei den kompletten Hohlraum des Querträgers ausfüllt.

Wesentlich für eine effiziente Nutzung beider Tragsysteme ist deren Verbindung. Hierbei ist bekannt, daß zwei verbundene Halbschalen erheblich höhere Biegewiderstände aufweisen als zwei parallel geschaltete. Von entscheidender Bedeutung ist deshalb die Übertragung von Schubkräften zwischen den Bauteilen in Fahrzeugquerrichtung. Zur schubfesten Verbindung des Stahl U-Profils mit dem Hybridprofil stehen verschiedene Technologien zur Verfügung. Hierzu zählen Schrauben mit entsprechender Vorspannung, Nieten oder Durchsetzfügen im Bereich der Flanken, Clinchen, Kleben und Schweißen.

Erfindungsgemäß wird die möglichst ökonomischste Fügetechnologie angestrebt. Hierzu wird ein Formschluß beider Systeme in der Scherebene vorgeschlagen. Dieser Formschluß könnte u. a. erfolgen durch Verzahnungen oder Verformungen im Bereich des Schalenrandes, deren Gegenbilder sich im Bereich des Kunststoffs oder des Blechs der Gegenseite befinden.

Die Vorzüge dieses in sich vormontierbaren Systems sind wesentliche Gewichts- und Kosteneinsparungen, die Möglichkeit der Funktionsintegration in der Umgebung der Querträger (u.a. Stoßfängerabdeckung = Stoßfängerverkleidung) und Scheinwerferaufnahme, Elemente für den Fußgängerschutz (= Verstärkung Fußgängerschutz), Grills, Nebelscheinwerfer, sowie die Einsparung von Führungsund Stützelementen im Bereich des Montageträgers. Auf diesem Wege kommt die Konstruktion im Vergleich zu herkömmlichen Systemen mit wesentlich weniger Einzelteilen und Fügeschritten aus. Das Gesamtmodul läßt sich mit optionalen Energieabsorptionselementen zu einer Frontendstruktur verschrauben, die sowohl vor der Rostschutzbeschichtung der Gesamtkarosserie montiert werden kann, als auch die Möglichkeit bietet, durch vorherige Oberflächenbeschichtung, Träger für ein vormontiertes Frontend zu sein.

Weitere Merkmale der Erfindung ergeben sich aus den Figuren, die nachfolgend beschrieben sind. Es zeigt:

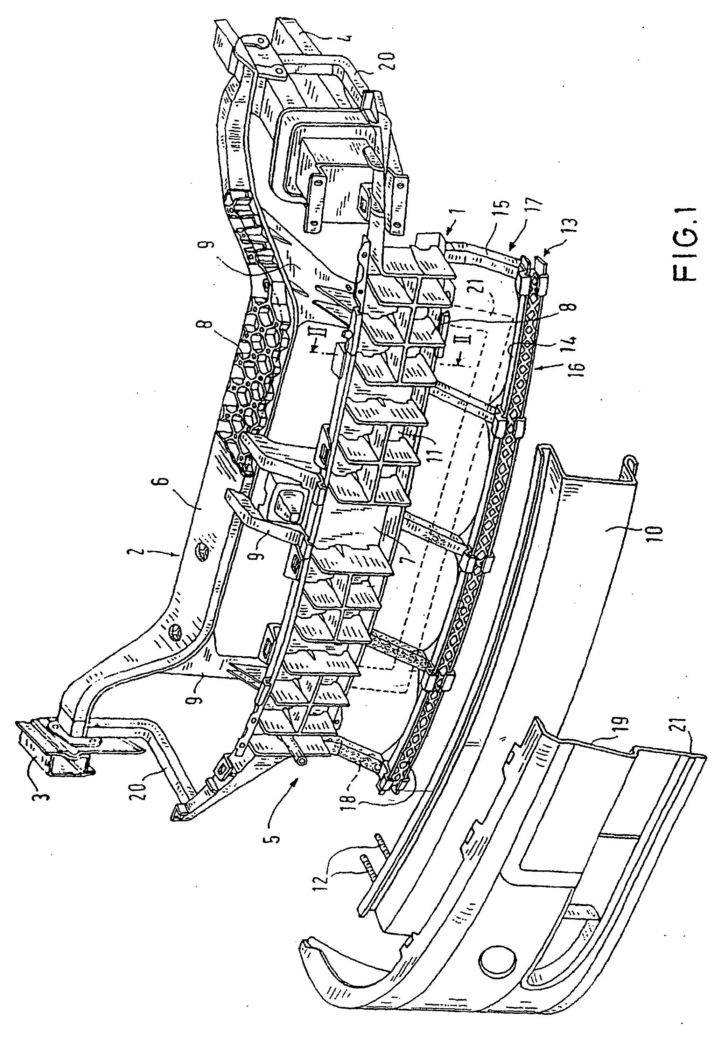

- Fig. 1: ein erfindungsgemäßes Frontendmodul mit Teilen eines Kraftfahrzeuges, an denen es befestigt ist und

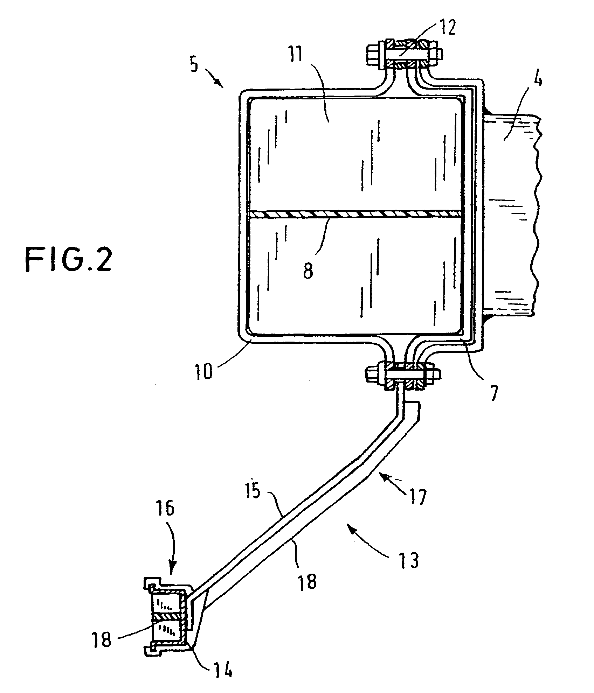

- Fig. 2: einen Schnitt durch das Frontendmodul gemäß Fig. 1 entlang der Linie II-II, und

Das Frontendmodul 1 besteht in der Ausführungsform wie hier gezeigt aus einem Montageträger bzw. einem oberen Querträger 2, einem Stoßfängerquerträger 5 und optional einem Fußgängerschutz 13. Auf dieses Frontendmodul 1 wird unter anderem die Außenverkleidung 19 aufgesetzt.

Der Montageträger 2 ist an den Kotflügelbänken 3 befestigt und der Stoßfängerquerträger 5 an den Längsträgern 4 des Kraftfahrzeugs. Der Montageträger 2 besteht aus einem durchgehenden Blechteil 6, in dem Kunststoffrippen 8 zur Versteifung eingeformt sind.

Der Stoßfängerquerträger 5 besteht aus einer Innenschale 7 aus Blech, die ein U-förmiges Profil aufweist. Auf diese Innenschale 7 wird optional eine Außenschale 10 aufgebracht, so daß ein Hohlraum 11 gebildet ist. In diesem Hohlraum 11 sind Kunststoffrippen 8 angeordnet, die den Hohlraum 11 in Fahrzeuglängsrichtung vollständig ausfüllen. Der Montageträger 2 ist mit dem Stoßfängerquerträger 5 durch Verbindungswangen 9 aus Kunststoff oder auch einem Kunststoff-Metall-Verbund verbunden. Alternativ können noch äußere Verbindungswangen 20 ebenfalls aus Kunststoff vorgesehen sein.

Unterhalb des Stoßfängerquerträgers 5 ist optional und für das Frontendmodul nicht zwingend notwendig ein Fußgängerschutz 13 angeordnet, der aus einem quer zum Fahrzeug angeordneten Teil 13 und Verbindungstreben 17 zum Stoßfängerquerträger 5 besteht. Das quer zum Fahrzeug angeordnete Teil 13 dient als Abstützung für einen Spoiler 21 der Außenverkleidung 19. Das Teil 13 ist ebenfalls als Hybridbauteil geformt und bestehe aus einem im Querschnitt U-förmigen Blechteil 14, welches mit Kunststoffrippen 18 ausgefüllt ist. Die Verbindungstreben 17 bestehen ebenfalls aus im Querschnitt U-förmigen Blechteilen 15, welche ebenfalls mit Kunststoffrippen 18 ausgefüllt sind.

Montageträger 2, Stoßfängerquerträger 5 und Fußgängerschutz 13 werden einteilig in einem Arbeitsschritt im Spritzgußverfahren hergestellt. Hierzu werden die Blechteile 6, 7, 14, 15 in die Kunststoff-Spritzform eingelegt und im anschließenden Spritzgußverfahren die gesamten Kunststoffkonturen eingeformt bzw. angeformt. Dies sind unter anderem die Kunststoffrippen 8 im Montageträger 2 und im Stoßfängerquerträger 5, die Verbindungswangen 3, wenn gewünscht die zusätzlichen äußeren Verbindungswangen 20, ggf. der Kühlerunterzug 21 und die Kunststoffrippen 18 im Fußgängerschutz 13, sowohl im Teil 13 als auch in den Verbindungsstreben 17.

Anschließend braucht nur noch zur weiteren Versteifung die Außenschale 10 z. B. durch Schrauben 12 an der Innenschale 7 befestigt zu werden.

## Patentansprüche

1. Frontendmodul (1) für ein Kraftfahrzeug mit einem Frontend-Montageträger (2) und mit einem die Längsträger (4) des Kraftfahrzeugs verbindenden Stoßfangerquerträger (5), **dadurch gekennzeichnet, daß** der Stoßfängerquerträger (5) und der Montageträger (2) einteilig im Kunststoff-Spritzgußverfahren als Hybridbauteil mit in die Gußform eingelegten Blechteilen (6, 7) hergestellt sind.

2. Frontendmodul nach Anspruch 1, **dadurch gekennzeichnet, daß** für den Montageträger (2) ein die Kotflügelbänke (3) und für den Stoßfängerquerträger (5) ein die Längsträger (4) des Kraftfahrzeugs verbindendes Blechteil (6, 7) vorgesehen sind.

3. Frontendmodul nach Anspruch 2, **dadurch gekennzeichnet, daß** die Blechteile (6, 7) ein im Querschnitt U-förmiges Profil aufweisen.

4. Frontendmodul nach einem der Ansprüche 1 bis 3, **dadurch gekennzeichnet, daß** die Blechteile (6, 7) durch Einformung von Kreuz- oder ähnlichen Kunststoffrippen (8) versteift sind.

5. Frontendmodul nach einem der Ansprüche 1 bis 4, **dadurch gekennzeichnet, daß** der Montageträger (2) und der Stoßfangerquerträger (5) durch Verbindungswangen (9) aus Kunststoff oder Kunststoff-Metall-Verbund verbunden sind.

6. Frontendmodul nach einem der Ansprüche 2 bis 5, **dadurch gekennzeichnet, daß** auf die umspritzte Innenschale (7) des Stoßfängerquerträgers (5) eine im Profil U-förmige Außenschale (10) aus Blech aufgesetzt ist, so daß ein innerer Hohlraum (11) entsteht.

7. Frontendmodul nach einem der Ansprüche 2 bis 6, **dadurch gekennzeichnet, daß** die Außenschale (10) mit der Innenschale (7) durch Schrauben (12) vorzugsweise mit Vorspannung, Nieten, Durchsetzfügen im Bereich der Flanken, Clinchen, Kleben, Schweißen, oder formschlüssiges Fügen verbunden ist.

8. Frontendmodul nach Anspruch 7, **dadurch gekennzeichnet, daß** die Außenschale (10) und die Innenschale (7) einen Formschluß in der Scherebene aufweisen.

9. Frontendmodul nach einem der Ansprüche 4 bis 8, **dadurch gekennzeichnet, daß** das Profil der Kunststoffrippen (8) den inneren Hohlraum (11) des Stoßfängerquerträgers (5) in Fahrzeuglängsrichtung teilweise oder vollständig ausfüllt.

10. Frontendmodul nach einem der Ansprüche 4 bis 9, **dadurch gekennzeichnet, daß** sich die Kunststoffrippen (8) in Fahrzeuglängsrichtung erstrecken.

11. Frontendmodul nach einem der Ansprüche 1 bis 10, **dadurch gekennzeichnet, daß** unterhalb des Stoßfängerquerträgers (5) ein Fußgängerschutz (13) angeordnet ist, der ebenfalls einteilig mit dem oberen Querträger (2) und dem Stoßfängerquerträger (5) im Kunststoff-Spritzgußverfahren als Hybridbauteil mit in die Gußform eingelegten Blechteilen (6, 7, 14, 15) hergestellt ist.

12. Frontendmodul nach Anspruch 11, **dadurch gekennzeichnet, daß** der Fußgängerschutz (13) aus einem sich quer zur Fahrzeuglängsrichtung erstreckenden Teil (16) und aus Verbindungsstreben (17) zum Stoßfängerquerträger (5) besteht.

13. Frontendmodul nach Anspruch 11 oder 12, **dadurch gekennzeichnet, daß** die Blechteile (14, 15) des Fußgängerschutzes (13) ein U-förmiges Profil aufweisen und mit Kunststoffrippen (18) ausgefüllt sind.

14. Verfahren zur Herstellung eines Frontendmoduls (1) für ein Kraftfahrzeug mit einem Montageträger (2) zwischen den Kotflügelbänken (3) und mit einem die Längsträger (4) des Kraftfahrzeugs verbindenden Stoßfängerquerträger (5), **dadurch gekennzeichnet, daß** Blechteile (6, 7) für den oberen Querträger (2) und den Stoßfängerquerträger (5) in eine Kunststoff-Spritzgußform eingelegt werden und diese Blechteile (6, 7) durch Einformen von Kunststoffrippen (8) versteift und miteinander verbunden werden.

15. Verfahren nach Anspruch 14, **dadurch gekennzeichnet, daß** zusätzlich Blechteile (14, 15) für einen unterhalb des Stoßfängerquerträgers (5) angeordneten Fußgängerschutz (13) in die Gußform eingelegt werden.

## Claims

1. A front end module (1) for a motor vehicle with a front end assembly support (2) and with a bumper transverse support (5) connecting the longitudinal supports (4) of the motor vehicle, **characterised in that** the bumper transverse support (5) and the assembly support (2) are integrally manufactured in a plastics material injection moulding process as a hybrid component with sheet metal parts (6, 7) being placed in the casting mould.

2. A front end module according to claim 1, **characterised in that** a sheet metal part (6) connecting the mudguard seats (3) is provided for the assembly support (2) and a sheet metal part (7) connecting the longitudinal supports (4) of the motor vehicle is provided for the bumper transverse support (5).

3. A front end module according to claim 2, **characterised in that** the sheet metal parts (6, 7) have a profile which is U-shaped in cross section.

4. A front end module according to one of claims 1 to 3, **characterised in that** the sheet metal parts (6, 7) are reinforced by the moulding-in of cross ribs or similar plastics material ribs (8).

5. A front end module according to one of claims 1 to 4, **characterised in that** the assembly support (2) and the bumper transverse support (5) are connected by connecting cheeks (9) made of plastics material or a plastics material/metal composite.

6. A front end module according to one of claims 2 to 5, **characterised in that** an outer shell (10) of sheet metal having a U-shaped profile is placed onto the inner shell (7) of the bumper transverse support (5), around which inner shell (7) injection moulding has been effected, so that an inner cavity (11) is formed.

7. A front end module according to one of claims 2 to 6, **characterised in that** the outer shell (10) is connected to the inner shell (7) by screws (12), preferably with prestressing, by riveting, through joining in the region of the flanks, clinching, adhesion, welding or interlocking joints.

8. A front end module according to claim 7, **characterised in that** the outer shell (10) and the inner shell (7) have an interlocking joint in the shearing plane.

9. A front end module according to one of claims 4 to 8, **characterised in that** the profile of the plastics material ribs (8) partially or completely fills the inner cavity (11) of the bumper transverse support (5) in the longitudinal direction of the vehicle.

10. A front end module according to one of claims 4 to 9, **characterised in that** the plastics material ribs (8) extend in the longitudinal direction of the vehicle.

11. A front end module according to one of claims 1 to 10, **characterised in that** arranged beneath the bumper transverse support (5) is a pedestrian protection (13), which is also integrally manufactured with the upper transverse support (2) and the bumper transverse support (5) in a plastics material injection moulding process as a hybrid component with sheet metal parts (6, 7, 14, 15) placed in the casting mould.

12. A front end module according to claim 11, **characterised in that** the pedestrian protection (13) is formed by a part (16) extending transversely to the longitudinal direction of the vehicle and connecting struts (17) to the bumper transverse support (5).

13. A front end module according to claim 11 or 12, **characterised in that** the sheet metal parts (14, 15) of the pedestrian protection (13) have a U-shaped profile and are filled with plastics material ribs (18).

14. A method of manufacturing a front end module (1) for a motor vehicle with an assembly support (2) between the mudguard seats (3) and with a bumper transverse support (5) connecting the longitudinal supports (4) of the motor vehicle, **characterised in that** sheet metal parts (6, 7) for the upper transverse support (2) and the bumper transverse support (5) are placed in an injection mould for plastics material and the said sheet metal parts (6, 7) are reinforced and connected with one another by the moulding-in of plastics material ribs (8).

15. A method according to claim 14, **characterised in that** additional sheet metal parts (14, 15) for a pedestrian protection (13) arranged beneath the bumper transverse support (5) are placed in the casting mould.

## Revendications

1. Module d'extrémité avant (1) pour véhicule automobile présentant un support de montage d'extrémité avant et un support transversal de parechocs (5) reliant les longerons (4) du véhicule, **caractérisé en ce que** le support transversal de parechocs (5) et le support de montage (2) sont réalisés en une seule pièce par le procédé d'injection de matière plastique sous la forme d'une pièce hybride avec des parties en tôle (6, 7) montées dans le moule de coulée.

2. Module d'extrémité avant selon la revendication 1, **caractérisé en ce que** il est prévu d'une part pour le support de montage (2) une partie en tôle (6) reliant les assises des ailes du véhicule, d'autre part pour le support transversal de parechocs une partie en tôle (7) reliant les longerons (4) du véhicule.

3. Module d'extrémité avant selon la revendication 2, **caractérisé en ce que** les parties en tôle (6, 7) présentent un profil dont la section est en forme de U.

4. Module d'extrémité selon une des revendications 1 à 3, **caractérisé en ce que** les parties en tôle (6, 7) sont raidies par moulage de nervures (8) en croix ou analogues en matière plastique

5. Module d'extrémité selon une des revendications 1 à 4, **caractérisé en ce que** le support de montage (2) et le support transversal de parechocs (5) sont reliés par des joues de liaison (9) en matière plastique ou en composite plastique-métal.

6. Module d'extrémité selon une des revendications 1 à 5, **caractérisé en ce que** sur la coquille interne (7) injectée du support transversal de parechocs (5) est montée une coque externe (10) en tôle à profil en U, de manière à créer un volume creux interne (11).

7. Module d'extrémité selon une des revendications 2 à 6, **caractérisé en ce que** la coquille externe (10) est reliée à la coquille interne (7) par des vis (12) de préférence avec précontrainte, des rivets, des joints de transit dans la zone des flancs, par collage, soudure ou par jointoiement par complémentarité de formes.

8. Module d'extrémité selon la revendication 7, **caractérisé en ce que** la coquille externe (10) et la coquille interne (7) présentent dans le plan de cisaillement un verrouillage par complémentarité de formes.

9. Module d'extrémité selon une des revendications 4 à 8, **caractérisé en ce que** le profil des nervures en matière plastique (8) remplit selon la direction longitudinale du véhicule totalement ou partiellement le volume interne creux (11) du support transversal de parechocs (5).

10. Module d'extrémité selon une des revendications 4 à 9, **caractérisé en ce que** les nervures en matière plastique s'étendent selon la direction longitudinale du véhicule.

11. Module d'extrémité selon une des revendications 1 à 10, **caractérisé en ce que** en dessous du support transversal de parechocs se trouve une protection de piétons (13) qui est fabriquée également en une seule pièce avec le support transversal supérieur (2) et le support transversal de parechocs (5) par le procédé d'injection en tant que composant hybride avec des parties en tôle (6, 7, 14, 15) montées dans le moule de coulée.

12. Module d'extrémité selon la revendication 11, **caractérisé en ce que** la protection de piétons (13) est composée d'une partie (16) s'étendant transversalement à la direction longitudinale du véhicule et de pattes de liaison (17) aboutissant au support transversal de parechocs (5).

13. Module d'extrémité selon la revendication 11 ou 12, **caractérisé en ce que** les parties en tôle (14, 15) de la protection de piétons (13) présentent un profil en forme d'U et sont remplies de nervures en matière plastique (18).

14. Procédé de fabrication d'un module d'extrémité avant (1) pour un véhicule automobile présentant un support de montage (2) entre les assises d'ailes (3) et un support transversal de parechocs (5) reliant les longerons (4) du véhicule, **caractérisé en ce que** des parties en tôle (6, 7) destinées au support transversal supérieur (2) et au support transversal de parechocs (5) sont insérées dans un moule de coulée de matière plastique par injection et ces parties sont rigidifiées et reliées l'une à l'autre par moulage interne de nervures en matière plastique (8).

15. Procédé de fabrication selon la revendication 14, **caractérisé en ce que** des parties en tôle (14, 15) destinées à une protection de piétons (13) située en dessous du support transversal (5), sont montées dans le moule de coulée.
